# EUROPÄISCHE PATENTSCHRIFT

(11) **EP 1 653 013 B1**
(45) Veröffentlichungstag und Bekanntmachung des Hinweises auf die Patenterteilung: **31.01.2007**
(21) Anmeldenummer: 05020340.5
(22) Anmeldetag: 19.09.2005
(51) Int. Cl.: E03C 1/02, F16L 33/24, F16L 27/08

(54) **Anschlusskupplung für einen Sanitärschlauch**
Connecting coupling for a sanitary hose
Raccord d'accouplement pour un tuyau souple sanitaire

(30) Priorität: 29.10.2004 DE 202004016773 U
(43) Veröffentlichungstag der Anmeldung: 03.05.2006
(73) Patentinhaber: OLDOPLAST KUNSTSTOFFPROFILE GMBH & CO. KG, 45772 Marl (DE)
(72) Erfinder: Börgel, Helmut, 45772 Marl (DE)
(74) Vertreter: GROSSE BOCKHORNI SCHUMACHER

(56) Entgegenhaltungen:
- EP-A- 0 423 644
- EP-A- 1 486 716
- DE-U1- 9 311 787
- DE-U1- 29 522 087

## Beschreibung

Die Erfindung betrifft eine Anschlusskupplung zum Befestigen eines Brausekopfes oder dgl. an einem Sanitärschlauch oder dgl. gemäß dem Oberbegriff des Anspruchs 1.

Sanitärschläuche mit einer drehbaren Anschlusskupplung werden vor allem in Bädern verwendet, und zwar dient hier die Kupplung vorzugsweise zum drehbaren Anschluss einer Handbrause. Die drehbare Befestigung der Handbrause am Sanitärschlauch erleichtert dabei die Handhabung der Handbrause, respektive des Brausekopfes, wesentlich, da die meisten Sanitärschläuche im wesentlichen torsionsfest sind und die Handbrause bei einer festen Verschraubung mit dem Sanitärschlauch sich bei ihrem Gebrauch kaum radial drehen lässt. Ist dagegen der Sanitärschlauch über eine Anschlusskupplung mit einer drehbaren Handbrause versehen, lässt sich diese um das Ende des Sanitärschlauches drehen und dadurch besser handhaben.

Aus DE 295 22 087 U ist bereits eine Anschlusskupplung zum Befestigen eines Brausekopfes an einem Sanitärschlauch bekannt, die eine Überwurfmutter mit einem Innenring aufweist, der mit der Überwurfmutter verschraubt ist. In der Überwurfmutter ist ferner eine Metallhülse drehbar aufgenommen, die fest mit dem Schlauchende verbunden ist. Über eine derartige Anschlusskupplung kann der Sanitärschlauch an einem Brausekopf befestigt werden, indem die Überwurfmutter mit Ihrem Gewinde mit dem Brausekopfstutzen verschraubt wird.

Eine derartige Anschlusskupplung zum Befestigen einer Handbrause hat sich durchaus bewährt. Kommt jedoch eine derartige Anschlusskupplung bei einem relativ harten Wasser zum Einsatz, besteht die Gefahr, dass eine solche Anschlusskupplung im Laufe der Zeit verkalkt und somit sich nur schwer bis gar nicht mehr drehen lässt. Ein Auswechseln der Anschlusskupplung ist dann nur noch durch eine Zerstörung des Schlauchendes möglich.

Hier setzt die Erfindung ein, der die Aufgabe zugrunde liegt, eine Anschlusskupplung zum Befestigen eines Brausekopfes oder dgl. an einem Sanitärschlauch oder dgl. zu schaffen, die sich z.B. im Falle einer Verkalkung der Drehvorrichtung bei gleichwohl einfachem Aufbau ohne Zerstörung des Sanitärschlauches wieder leicht lösen lässt.

Diese Aufgabe wird erfindungsgemäß in einfacher Weise durch die im kennzeichnenden Teil des Anspruchs 1 enthaltenen Merkmale gelöst, wobei zweckmäßige Weiterbildungen durch die Merkmale der Unteransprüche gekennzeichnet sind.

Nach Maßgabe der Erfindung ist als Lösung vorgesehen, dass der Sanitärschlauch an seinem Ende mit einer angespritzten Flanschbuchse versehen wird, die mit einer auf dem Sanitärschlauch reitenden Gewindehülse derart zusammenwirkt, dass sich die Gewindehülse an der nach außen ragenden Ringsflansch der Flanschbuchse abstützt, und zwar indem die Gewindehülse mit einer an der Überwurfmutter fixierten und drehbar gelagerten Innenbuchse verschraubt wird.

Falls nun eine derartige Drehverbindung verkalkt, dann kann in einfacher Weise die erfindungsgemäße Anschlusskupplung abgenommen werden, indem die auf dem Sanitärschlauch reitende Gewindehülse abgeschraubt wird. Die übrigen Kupplungsteile wie Überwurfmutter und Innenbuchse können dann durch entsprechende neue Teile ersetzt werden, die dann lediglich mit der auf dem Sanitärschlauch reitenden Gewindehülse wieder verschraubt werden müssen.

Die auf den Sanitärschlauch geschobene, wieder verwendbare Gewindehülse ist an einem Ende mit einem Außengewinde versehen, mit dem sie bei der Montage in ein komplementäres Innengewinde der Innenbuchse leicht eingeschraubt werden kann. Um dieses Einschrauben zu erleichtern, besitzt die Gewindehülse ferner an ihrem anderen Ende ein Sechskantmutter-Profil oder gegenüberliegend ausgebildete parallele Abflachungen für den Eingriff mit einem Schraubschlüssel oder dergleichen.

Bei der Innenbuchse selbst ist es zweckmäßig, dass diese bodenseitig eine koaxial in die Überwurfmutter ragende und mit dieser in Drehverbindung stehenden Steckhülse besitzt, die vorteilhaft einstückig mit der Innenbuchse ausgebildet ist.

Ferner besitzt die Überwurfmutter für die Drehverbindung mit der Steckhülse bodenseitig und vorteilhaft einstückig eine Ringsschulter, an deren zylindrischen Innenwand sich die Steckhülse abstützt, wobei die Ringschulter einen Lagerring aufweist, in dessen Eckbereich zur Festlegung der Steckhülse an der Übermutter zweckmäßigerweise ein Sprengring bzw. ein Seger-Runddraht vorgesehen sein kann, wodurch auch eine bessere Drehbarkeit der Anschlusskupplung erreicht wird.

Der Lagerring besteht zweckmäßigerweise aus Messing oder einem anderen geeigneten Lagerwerkstoff; wie überhaupt auch die anderen Kupplungsteile aus Messing bestehen können, wobei diese Teile dann vorzugsweise verchromt ausgebildet sind.

Schließlich ist es zweckmäßig, dass die Drehvorrichtung derart abgedichtet wird, indem in der Steckhülse mindestens ein gegenüber der zylindrischen Innenwand der Ringschulter der Überwurfmutter abdichtender Dichtring z.B. in Form eines an sich bekannten O - Dichtrings vorgesehen ist.

Weitere Einzelheiten und Vorteile der Erfindung werden nachfolgend durch ein Ausführungsbeispiel anhand der beigefügten Zeichnung näher erläutert und beschrieben. Darin zeigt:
- Fig. 1: einen Längsschnitt durch eine Anschlusskupplung mit an dieser angebrachtem Sanitärschlauch,
- Fig. 2: eine Vorderansicht der Anschlusskupplung nach Fig. 1 und

- Fig. 3: eine Einzelheit "x" gemäß Fig. 1 in einem vergrößertem Maßstab.

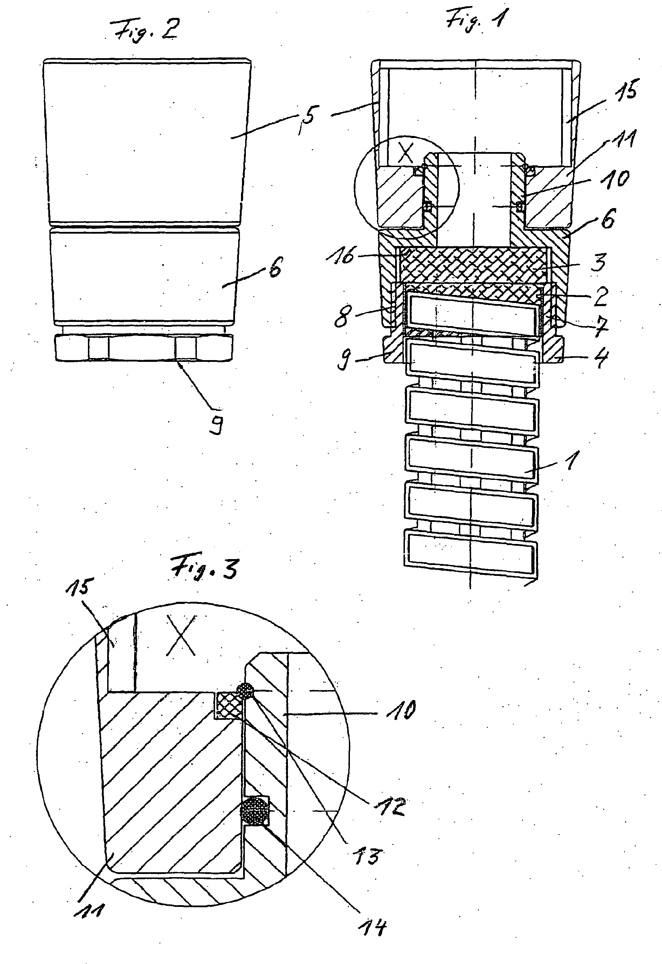

In Fig. 1 bezeichnet 1 einen üblichen flexiblen Sanitärschlauch, an dessen freien Ende eine Flanschbuchse 2 mit einem Ringflansch 3 befestigt ist, *was* in bekannter Weise *etwa* durch Anspritzen eines geeigneten zum Sanitärschlauch 1 kompatiblen Kunststoffmaterial (z.B. Hart ― PVC einer Shore-Härte von etwa 95) erfolgt ist, so dass die Flanschbuchse 2 dauerhaft und druckdicht mit dem Sanitärschlauch 1 verbunden ist.

Auf dem Sanitärschlauch 1 ist ferner eine auf diesem reitende, d. h. über diesen koaxial aufgesteckte Gewindehülse 4 vorgesehen, die mit einer Überwurfmutter 5 verbunden ist und zwar unter Zwischenschaltung einer an der Überwurfmutter 5 fixierten Innenbuchse 6. Hierbei ist die Überwurfmutter relativ zur Innenbuchse und daran befestigter Gewindehülse 4 drehbar angeordnet.

Im Einzelnen hat die Gewindehülse 4 an ihrem einen Endabschnitt ein Außengewinde 7, mit dem die Gewindehülse 4 in ein komplementäres Innengewinde 8 der Innenbuchse 6 geschraubt ist, wozu der andere Endabschnitt der Gewindehülse 4 auch mit einem Sechskantmutter-Profil 9 oder gegenüberliegend und parallel angeordneten ebenen Flächen für das Ansetzen eines Schraubschlüssels ausgebildet sein kann.

Die Innenbuchse 6 hat bodenseitig eine koaxial in die Überwurfmutter 5 ragende und mit dieser in Drehverbindung stehende Steckhülse 10, die hier mit der Innenbuchse 6 einstückig ausgebildet ist.

Die Überwurfmutter 5 besitzt für die Drehverbindung mit der Steckhülse 10 bodenseitig eine Ringschulter 11, an dessen zylindrischen Innenwand sich die Steckhülse 10 abstützt. Hierbei - wie in Fig. 3 vergrößert dargestellt- ist am oberen Ende der Ringschulter 11 ein Lagerring 12 aus Messing eingesetzt, in dessen freien Eckbereich zur drehbaren Festlegung der Steckhülse 10, respektive der Innenbuchse 6, an der Überwurfmutter 5 ein Sprengring bzw. Seger-Runddraht vorgesehen sein kann.

Schließlich ist in der Steckhülse 10 gegenüber der zylindrischen Innenwand der Ringschulter 11 der Überwurfmutter 5 ein abdichtender Dichtring 14 in der Form eines O-Dichtrings angeordnet. Bei Bedarf können auch mehrere Dichtungen 14 vorgesehen sein. Ferner kann die Steckhülse 10 an ihrem freien und der Überwurfmutter 15 zugerichteten Ende mit einem nicht dargestellten Innensechskant versehen sein, so dass die Innenbuchse 6 bzw. die Steckhülse 10 mit einem entsprechenden Inbus-Schlüssel oder dergleichen beim Aufschrauben der Gewindehülse 4 festgehalten werden kann, um eine feste Verschraubung der Gewindehülse 4 auf der Steckhülse 10 zu erreichen.

Bei dem vorliegenden Ausführungsbeispiel besteht sowohl die Gewindehülse 4 und die Innenbuchse 6 als auch die Überwurfmutter 5 aus verchromtem Messing, wobei dies keine materialmäßige Festlegung bedeutet.

Falls nun die Drehverbindung verkalkt ist, wird zuerst z. B. die nicht dargestellte Handbrause aus dem oberen Gewindeteil ― bezeichnet mit 15 - der Überwurfmutter 5 herausgeschraubt und sodann die Gewindehülse 4 gelöst , und zwar am zweckmäßigsten mit einer Rohrzange bei dem Sechskant 9, und dann aus der Innenbuchse 6 herausgeschraubt. Danach wird die Gewindehülse 4 in ein neues Teil der Anschlusskupplung aus Überwurfmutter 5 und Innenbuchse 6 eingeschraubt und schon ist die gesamte Anschlusskupplung wieder einsatzbereit, und zwar ohne dass der Sanitärschlauch 1 zerstört werden musste.

Bei der montierten erfindungsgemäßen Anschlusskupplung ist dabei sichergestellt, dass die eingeschraubte Gewindehülse 4 mit ihrer ringförmigen Stirnfläche fest an der Unterseite des auskragenden Teils des Ringflansches 3 der Flanschbuche 2 anliegt, so dass dieser gleichzeitig abdichtend gegen die Innenbuchse 6 bei 16 gedrückt wird. Es sei noch hervorgehoben, dass die Drehbarkeit der erfindungsgemäßen Anschlusskupplung besonders leichtgängig ist, was insbesondere auf den Lagerring 12 zurückzuführen ist.

## Patentansprüche

1. Anschlusskupplung zum Befestigen eines Brausekopfes oder dgl., an einem Sanitärschlauch oder dgl. mit einer Überwurfmutter zum Anschließen des Brausekopfes und mit einem drehbar mit der Überwurfmutter verbundenen Anschluss des Sanitärschlauches, **dadurch gekennzeichnet, dass** der Anschluss des Sanitärschlauches (1) durch eine am Sanitärschlauch (1) endseitig befestigte und mit einem radial vorstehenden Ringflansch (3) versehene Flanschbuchse (2) und einer auf dem Sanitärschlauch (1) reitende sowie an dem Ringflansch (3) der Flanschbuchse (2) stirnseitig fest anliegende Gewindehülse (4) gebildet ist, die unter Zwischenschaltung einer an der Überwurfmutter (5) drehbar fixierten Innenbuchse (6) mit der Überwurfmutter (5) verbunden ist.

2. Anspruch nach Anspruch 1, **dadurch gekennzeichnet, dass** die Flanschbuchse (2) mit ihrem endseitig angeordneten Ringflansch (3) am Sanitärschlauch (1) angespritzt ist.

3. Anschlusskupplung nach Anspruch 1 und 2, **dadurch gekennzeichnet, dass** die auf dem Sanitärschlauch (1) reitende Gewindehülse (4) einen Endabschnitt mit einem Außengewinde (7) besitzt, mit dem diese in ein komplementäres Innengewinde (8) der Innenbuchse (6) einschraubbar ist, wobei das freie Ende der Gewindehülse (4) *vorzugsweise* ein Sechskantmutter-Profil (9) oder dergleichen Angriffsflächen für einen Schraubschlüssel aufweist.

4. Anschlusskupplung nach einem der Ansprüche 1 bis 3, **dadurch gekennzeichnet, dass** die Innenbuchse (6) bodenseitig eine koaxial in die Überwurfmutter (5) ragende und mit dieser in Drehverbindung stehende Steckhülse (10) besitzt, welche *vorzugsweise* mit der Innenbuchse (6) einstückig ausgebildet ist.

5. Anschlusskupplung nach Anspruch 4, **dadurch gekennzeichnet, dass** die Überwurfmutter (5) für die Drehverbindung mit der Steckhülse (10) bodenseitig eine Ringschulter (11) besitzt, an deren zylindrischen Innenwand die Steckhülse (10) gelagert ist.

6. Anschlusskupplung nach Anspruch 5, **dadurch gekennzeichnet, dass** die Ringschulter (11) einen Lagerring (12) aufweist, in dessen freiem Eckbereich zur drehbaren Festlegung der Steckhülse (10) an der Überwurfmutter (5) ein Sprengring (13) oder dergleichen Befestigungsmittel vorgesehen ist.

7. Anschlusskupplung nach Anspruch 6, **dadurch gekennzeichnet, dass** der Lagerring (12) aus einem geeigneten Lagerwerkstoff wie insbesondere Messing besteht.

8. Anschlusskupplung nach den Ansprüchen 5 bis 7, **dadurch gekennzeichnet, dass** in der Steckhülse (10) mindestens ein gegenüber der zylindrischen Innenwand der Ringschulter (11) der Überwurfmutter (5) abdichtender Dichtring (14), wie ein O - Dichtring, vorgesehen ist.

## Claims

1. A connecting coupling for fastening a shower head or the like to a sanitary hose or the like including a retaining nut for connecting the shower head and a connector of the sanitary hose rotatably connected to the retaining nut, **characterised in that** the connector of the sanitary hose (1) is constituted by a flanged bush (2), which is fastened to the end of the sanitary hose (1) and is provided with a radially projecting annular flange (3), and a threaded sleeve (4), which is carried on the sanitary hose (1) and firmly engages the end surface of the annular flange (3) of the flanged bush (2) and is connected to the retaining nut (5) with the interposition of an internal bush (6), which is rotatably fixed on the retaining nut 5.

2. A connector coupling as claimed in claim 1, **characterised that** the flanged bush (2) with the annular flange (3) disposed on its end is injection moulded on the sanitary hose (1).

3. A connector coupling as claimed in claims 1 and 2, **characterised in that** the threaded sleeve (4) carried on the sanitary hose (1) has an end section with an external screw thread (7), with which it may be screwed into a complementary internal screw thread (8) on the internal bush (6), whereby the free end of the threaded sleeve (4), preferably a hexagonal nut profile (9) or the like, affords engagement surfaces for a spanner.

4. A connector coupling as claimed in one of claims 1 to 3, **characterised in that** the internal sleeve (6) has at its base an insertion sleeve (10), which projects coaxially into the retaining nut (5) and is rotarily connected to it and which is preferably constructed integrally with the internal sleeve (6).

5. A connector coupling as claimed in claim 4, **characterised in that** the retaining nut (5) for the rotary connection with the insertion sleeve (10) has an annular shoulder (11) at its base, on whose cylindrical internal wall the insertion sleeve (10) is supported.

6. A connector coupling as claimed in claim 5, **characterised in that** the annular shoulder (11) has a bearing ring (12), in the free corner region of which a circlet (13) or similar fastening means is provided for rotatably fastening the insertion sleeve (10) to the retaining nut (5).

7. A connector coupling as claimed in claim 6, **characterised in that** the bearing ring (12) consists of a suitable bearing material, particularly such as brass.

8. A connector coupling as claimed in claims 5 to 7, **characterised in that** at least one sealing ring (14) such as an O sealing ring, is provided in the insertion sleeve (10), which forms a seal with respect to the cylindrical internal wall of the annular shoulder (11) on the retaining nut (5).

## Revendications

1. Raccord d'accouplement pour fixer une pomme de douche ou analogue sur un flexible sanitaire ou analogue avec un écrou-chapeau pour raccorder la pomme de douche et avec un raccord du flexible sanitaire relié de manière à pouvoir tourner avec l'écrou-chapeau, **caractérisé en ce que** le raccord du flexible sanitaire (1) est formé par une douille à bride (2), fixée à l'extrémité du flexible sanitaire (1) et pourvue d'une bride annulaire dépassant radialement (3), et par une douille filetée (4), chevauchant le flexible sanitaire (1) et positionnée de manière fixe face à la bride annulaire (3) de la douille à bride (2), qui est reliée à l'écrou-chapeau (5) par intercalation d'une douille interne (6) fixée de manière à pouvoir tourner sur l'écrou-chapeau (5).

2. Raccord d'accouplement selon la revendication 1, **caractérisé en ce que** la douille à bride (2) avec sa bride annulaire (3) disposée à l'extrémité est moulée par injection sur le flexible sanitaire (1).

3. Raccord d'accouplement selon les revendications 1 et 2, **caractérisé en ce que** la douille filetée (4) chevauchant le flexible sanitaire (1) possède un segment d'extrémité présentant un filetage (7), avec lequel celle-ci peut être vissée dans un taraudage complémentaire (8) de la douille interne (6), dans lequel l'extrémité libre de la douille filetée (4) présente de préférence un profil d'écrou hexagonal (9) ou des surfaces de prise analogues pour une clé.

4. Raccord d'accouplement selon l'une quelconque des revendications 1 à 3, **caractérisé en ce que** la douille interne (6) possède, au fond, un manchon d'accouplement (10) rentrant coaxialement dans l'écrou-chapeau (5) et relié de manière à pouvoir tourner avec celui-ci, lequel est de préférence formé d'un seul tenant avec la douille interne (6).

5. Raccord d'accouplement selon la revendication 4, **caractérisé en ce que** l'écrou-chapeau (5), pour la liaison rotative avec le manchon d'accouplement (10), possède du côté du fond, un épaulement annulaire (11) au niveau de la paroi interne cylindrique duquel est logé le manchon d'accouplement (10).

6. Raccord d'accouplement selon la revendication 5, **caractérisé en ce que** l'épaulement annulaire (11) présente une bague-support (12), dans la zone angulaire libre de laquelle est prévue une bague de sûreté (13) ou un moyen de fixation analogue pour le positionnement rotatif du manchon d'accouplement (10) sur l'écrou-chapeau (5).

7. Raccord d'accouplement selon la revendication 6, **caractérisé en ce que** la bague-support (12) se compose d'un matériau antifriction approprié tel que, en particulier, le laiton.

8. Raccord d'accouplement selon les revendications 5 à 7, **caractérisé en ce qu'**au moins un joint d'étanchéité (14), tel un joint torique d'étanchéité, est prévu dans le manchon d'accouplement (10) pour assurer l'étanchéité par rapport à la paroi interne cylindrique de l'épaulement annulaire (11) de l'écrou-chapeau (5).
